# EUROPÄISCHE PATENTSCHRIFT

(11) **EP 0 714 761 B1**
(45) Veröffentlichungstag und Bekanntmachung des Hinweises auf die Patenterteilung: **15.03.2000**
(21) Anmeldenummer: 95117210.5
(22) Anmeldetag: 02.11.1995
(51) Int. Cl.: B32B 15/01, B23K 35/02, B23K 35/00

(54) **Metallischer Verbundwerkstoff in Bandform, Verfahren zu seiner Herstellung und seine Verwendung**
Metallic composite material in stripform; manufacturing method and use thereof
Matériau composite métallique sous forme de bande; procédé de sa fabrication et son utilisation

(30) Priorität: 01.12.1994 DE 4442773
(43) Veröffentlichungstag der Anmeldung: 05.06.1996
(73) Patentinhaber: W.C. Heraeus GmbH & Co. KG, 63450 Hanau (DE)
(72) Erfinder: Eisentraut, Holger, 63505 Langenselbold (DE); Baier, Gerd, 09599 Freiberg (DE); Grunewald, Rolf, 09634 Obergruna (DE)
(74) Vertreter: Kühn, Hans-Christian

(56) Entgegenhaltungen:
- EP-A- 0 206 521
- DE-A- 3 638 522
- GB-A- 637 945
- GB-A- 2 144 064
- US-A- 3 042 428
- PATENT ABSTRACTS OF JAPAN vol. 6 no. 132 (E-119) ,17.Juli 1982 & JP-A-57 058340 (NEC CORP) 8.April 1982,
- PATENT ABSTRACTS OF JAPAN vol. 17 no. 146 (C-1039) ,24.März 1993 & JP-A-04 314838 (TOYO RADIATOR CO) 6.November 1992,

## Beschreibung

Die Erfindung betrifft einen metallischen Verbundwerkstoff in Bandform mit einer aluminiumhaltigen Grundschicht und einer darauf aufgebrachten Beschichtung, ein Verfahren zu seiner Herstellung und seine Verwendung.

Der Verbundwerkstoff in Bandform gemäß der Erfindung ist ein Werkstoff auf Aluminium-Basis, der eine gute Benetzungsfähigkeit besitzt und sich ohne Schwierigkeiten durch Löten verarbeiten läßt und zum Beispiel zur Herstellung von Wärmetauschern eingesetzt werden kann.

Sowohl die Schwierigkeiten beim Löten von Aluminium-Werkstoffen als auch die Verwendung der Werkstoffe für Wärmetauscher sind nicht neu. Zu den Schwierigkeiten beim Löten gehört z. B. die Bildung von heterogenen Lötzonen, die die Korrosionsbeständigkeit durch Lokalelementbildung stark herabsetzen können (deutsche Patentschrift 1 217 734). Zur Vermeidung der mit dem Lötvorgang verbundenen Schwierigkeiten wird in DE 31 17 661 A1 vorgeschlagen, bei der Herstellung von Aluminium-Wärmetauschern, besonders von Benzinkühlern für Einspritzmotoren, anstelle des Lötens O-Ringdichtungen und Bördelungen zu benutzen.

Aus DE 31 27 980 C2 ist ein für Rohre von hartgelöteten Wärmetauschern bestimmter korrosionsbeständiger Verbundwerkstoff aus einer plattierten Aluminium-Kernlegierung bekannt. Die Kernlegierung besteht aus einer 0,2 - 2 % Kupfer enthaltenden Aluminium-Legierung, der Plattierwerkstoff aus Reinaluminium, einer Aluminium-Mangan- oder einer Aluminium-Magnesium-Silizium-Legierung. Die Plattierschicht aus dem Plattierwerkstoff bildet als Opferanode die Innenseite der Wärmetauscherrohre, die auf ihrer Außenseite einen Hartlötwerkstoff aufweisen können. Die Wärmetauscherrohre werden aus den platten- beziehungsweise blechförmigen oder streifenförmigen Verbundwerkstoffen mit Hilfe des Nahtschweißverfahrens hergestellt und durch Hartlöten mit den Rippen verbunden. Sie eignen sich besonders für Automobilkühler und Heizvorrichtungen.

In DE 34 33 984 C2 wird ein evakuiertes und zu einem Bruchteil mit Wasser als flüssigem Wärmeträgermedium befülltes Wärmerohr aus Aluminium oder Stahl beschrieben. Das Wärmerohr ist innenseitig allseits mit einem vollständig geschlossenen flüssigkeitsdichten Überzug aus wasserbeständigem Metall versehen. Der etwa 10 - 30 Mikrometer starke Innenüberzug besteht besonders aus Kupfer, Nickel, einer Kupfer-Nickel-Legierung oder einem Hartlotmaterial. Zur Herstellung des Wärmerohres wird ein durch Strangpressen erhaltenes Rohrteil aus Aluminium verwendet. Der Überzug kann auf chemische Weise oder galvanisch aufgebracht werden; auch ein Druckplattieren oder ein Lötplattieren unter Verwendung entsprechend geformter dünner Metallfolien ist möglich. Insbesondere bei der Lötplattierung kann als Überzugsmaterial auch ein Hartlotmaterial verwendet werden.

Der Erfindung liegt die Aufgabe zugrunde, einen bandförmigen Werkstoff auf Aluminium-Basis der eingangs charakterisierten Art zu finden, der sich ohne Schwierigkeiten durch Hart- oder Weichlöten verarbeiten läßt. Der Werkstoff soll unter anderem zur Herstellung von Wärmetauschern geeignet sein.

Die Aufgabe wird durch einen Verbundwerkstoff gemäß den Merkmalen Anspruchs 1 gelösst.

Bewährt hat sich der Verbundwerkstoff sowohl mit einseitiger als auch mit beidseitiger Beschichtung.

Bei einseitiger Beschichtung kann es vorteilhaft sein, die andere Seite des Verbundwerkstoffes mit einer zusätzlichen kupferhaltigen Schicht zu versehen.

Die aluminiumhaltige Grundschicht des Verbundwerkstoffes kann aus Aluminium oder einer Aluminium-Legierung mit mindestens 50 Gewichts-% Aluminium bestehen. Besonders bewährt haben sich handelsübliches Reinaluminium (99,5 %, Al 99,5) und die bekannten Aluminium-Knetlegierungen, zum Beispiel Aluminium-Magnesium-Knetlegierungen (Ullmanns Encyklopädie der technischen Chemie, Band 7, 4. Auflage (1974), 282).

Die kupferhaltige Schicht - sowohl die zwischen der Grundschicht und der Lot-Schicht angeordnete als auch die zusätzliche - besteht aus Kupfer, aus Kupfer-Basis Legierung oder vorzugsweise einer Kupfer-Legierung mit mindestens 50 Gewichts-% Kupfer. Neben Kupfer, speziell in Form des Elektrolytkupfers (E-Kupfer, E-Cu; Reinheit 99,95 %), haben sich die bekannten Kupfer-Zinn-Legierungen (Zinnbronzen), wie zum Beispiel CuSn6, und niedriglegierte Kupfer-Eisen-Legierungen, wie zum Beispiel CuFe2, besonders bewährt (Ullmanns Encyklopädie der technischen Chemie, Band 15, 4. Auflage (1978), 551; Römpp Chemie Lexikon, Band 3, 9. Auflage (1990), 2412).

Für die Lot-Schicht eignen sich alle zu Lot-Folienbändern zu verarbeitenden Hart- und Weichlote. Bevorzugt werden Silber-Hartlote, zum Beispiel LAg15P und LAg49 (DIN 8513), und Blei/Zinn-Weichlote, zum Beispiel LPbSn40 und LPbSn8Sb (DIN 1707).

Die Dicke der aluminiumhaltigen Grundschicht beträgt 50 - 80 % und die der Lot-Schicht 5 - 20 %, vorzugsweise 10 - 20 %, der Dicke des Verbundwerkstoffes.

Die Breite des Verbundwerkstoffes kann variieren und wird dem Bedarf entsprechend gewählt.

Das Verbundwerkstoffband gemäß der Erfindung zeichnet sich durch die sehr gute Verbundfestigkeit der das Band bildenden Schichten aus. Überraschenderweise wird durch die kupferhaltige Schicht eine ausgezeichnete Haftfestigkeit der aus Hart- oder Weichloten bestehenden Lot-Schicht erzielt; die Oberfläche der Lot-Schicht ist dicht und porenfrei. Da die kupferhaltige Schicht nicht nur die Haftfestigkeit, Benetzungsfähigkeit und Lötbarkeit der Lot-Schicht bewirkt, sondern auch die physikalischen und funktionellen Eigenschaften des Verbundwerkstoffes beeinflußt, ist es möglich, durch die Auswahl der die aluminiumhaltige Grundschicht und die kupferhaltige Schicht bildenden Materialien einen Verbundwerkstoff mit einer seinem Verwendungszweck angepaßten Kombination von Eigenschaften zu schaffen.

Für die Herstellung des erfindungsgemäßen Verbundwerkstoffes hat sich das kontinuierliche Walzplattieren der den Verbundwerkstoff bildenden Schichten bewährt. Als besonders vorteilhaft hat sich das Verfahren des kontinuierlichen Kaltwalzplattierens, wie es zum Beispiel aus DE 16 27 763 B2 bekannt ist, erwiesen. Es hat sich gezeigt, daß der so hergestellte Verbundwerkstoff eine sehr gute Bindungsfestigkeit, Duktilität, Biegbarkeit und Tiefziehfähigkeit besitzt.

Mit dem erfindungsgemäßen Verbundwerkstoff wird ein Werkstoff auf Basis von reinem bis hochreinem Aluminium und von Aluminium-Legierungen mit mindestens 50 Gewichts-% Aluminium zur Verfügung gestellt, der ohne Schwierigkeiten sowohl durch Hartlöten als auch durch Weichlöten zu verarbeiten ist und vielfältig eingesetzt werden kann. Da das Lotmaterial als Lot-Schicht Teil des Verbundwerkstoffes ist, braucht beim Lötprozeß kein Lotmaterial zugegeben zu werden und entfällt das aufwendige Placieren des Lotmaterials. Beim Löten kann, falls erforderlich, ein Flußmittel verwendet werden. Die mit dem Weichlöten verbundenen Vorzüge (niedrigere Temperaturen, umweltfreundlichere Flußmittel und anderes) lassen den mit einer Weichlot-Schicht ausgestatteten Verbundwerkstoff gemäß der Erfindung als besonders wertvoll erscheinen.

Bewährt hat sich die Verwendung des mit einem Weichlot plattierten Verbundwerkstoffes als Halbzeug zur Herstellung von leichtgewichtigen Wärmetauschern, speziell von Leichtmetall-Kühlern. Hierbei erweist es sich als besonders vorteilhaft, daß aus dem Halbzeug alle für die Wärmetauscher benötigten Komponenten geformt und nach dem Fügen der geformten Komponenten die Wärmetauscher durch halb- oder vollautomatisches Weichlöten, das im Gegensatz zum Hartlöten den Werkstoff thermisch weniger stark beansprucht, fertiggestellt werden können.

Zur näheren Erläuterung der Erfindung werden in den folgenden Beispielen Ausführungsformen des Verbundwerkstoff-Bandes beschrieben, wie sie beispielsweise für die Fertigung eines Wärmetauschers benutzt werden können. Der Grundaufbau des Wärmetauschers als solcher ist bekannt.

### Beispiel 1

Verbundwerkstoff mit einseitiger Beschichtung
Weichlot-Schicht aus LPbSn8Sb, Dicke 0,025 Millimeter
kupferhaltige Schicht aus E-Cu, Dicke 0,030 Millimeter
Grundschicht aus AlMg2Mn0,3, Dicke 0,110 Millimeter

### Beispiel 2

Verbundwerkstoff mit einseitiger Beschichtung und zusätzlicher kupferhaltiger Schicht
Weichlot-Schicht aus LPbSn8Sb, Dicke 0,015 Millimeter
kupferhaltige Schicht aus E-Cu, Dicke 0,015 Millimeter
Grundschicht aus AlMg2Mn0,3, Dicke 0,055 Millimeter
zusätzliche kupferhaltige Schicht aus E-Cu, Dicke 0,015 Millimeter

### Beispiel 3

Verbundwerkstoff mit beidseitiger Beschichtung
Weichlot-Schicht aus LPbSn8Sb, Dicke 0,05 Millimeter
kupferhaltige Schicht aus E-Cu, Dicke 0,1 Millimeter
Grundschicht aus Al99,5, Dicke 0,6 Millimeter
kupferhaltige Schicht aus E-Cu, Dicke 0,1 Millimeter
Weichlot-Schicht aus LPbSn8Sb, Dicke 0,05 Millimeter

## Patentansprüche

1. Metallischer Verbundwerkstoff in Bandform aus einer Grundschicht aus Aluminium oder Aluminium-Basis Legierung und einer darauf Mittels Walzplattieren aufgebrachten Beschichtung, dadurch gekennzeichnet, daß die Beschichtung aus einer Schicht aus Kupfer oder Kupfer-Basis Legierung und einer Lot-Schicht besteht, die Schicht aus Kupfer oder Kupfer-Basis Legierung zwischen Grundschicht und Lot-Schicht angeordnet ist, die Dicke der aus Kupfer oder Kupfer-Basis Legierung bestehenden Schicht im Bereich von 0,005 - 0,5 Millimeter liegt und der Verbundwerkstoff eine Dicke im Bereich von 0,05 - 3 Millimeter aufweist.

2. Verbundwerkstoff nach Anspruch 1, dadurch gekennzeichnet, daß die Grundschicht einseitig mit der Beschichtung versehen ist.

3. Verbundwerkstoff nach Anspruch 2, dadurch gekennzeichnet, daß die Grundschicht auf der der Beschichtung gegenüberliegenden Oberfläche eine zusätzliche Schicht aus Kupfer oder Kupfer-Basis Legierung aufweist.

4. Verbundwerkstoff nach Anspruch 1, dadurch gekennzeichet, daß die Grundschicht beidseitig mit der Beschichtung versehen ist.

5. Verbundwerkstoff nach einem der Ansprüche 1 bis 4, dadurch gekennzeichnet, daß die Dicke der Grundschicht 50 - 80 % der Dicke des Verbundwerkstoffes beträgt.

6. Verbundwerkstoff nach einem der Ansprüche 1 bis 5, dadurch gekennzeichnet, daß die Dicke der Lot-Schicht 5 - 20 % der Dicke des Verbundwerkstoffes beträgt.

7. Verbundwerkstoff nach einem der Ansprüche 1 bis 6, dadurch gekennzeichnet, daß die Aluminium-Legierung aus mindestens 50 Gewichts-% Aluminium besteht.

8. Verbundwerkstoff nach einem der Ansprüche 1 bis 7, dadurch gekennzeichnet, daß die Kupfer-Legierung aus mindestens 50 Gewichts-% Kupfer besteht.

9. Verbundwerkstoff nach einem der Ansprüche 1 bis 8, dadurch gekennzeichnet, daß die Lot-Schicht aus einem Hartlot besteht.

10. Verbundwerkstoff nach einem der Ansprüche 1 bis 8, dadurch gekennzeichnet, daß die Lot-Schicht aus einem Weichlot besteht.

11. Verfahren zur Herstellung des metallischen Verbundwerkstoffes nach einem der Ansprüche 1 bis 10, dadurch gekennzeichnet, daß die den Verbundwerkstoff bildenden Schichten durch kontinuierliches Walzplattieren miteinander verbunden werden.

12. Verwendung des metallischen Verbundwerkstoffes nach einem der Ansprüche 1 bis 10 für die Herstellung von Wärmetauschern.

## Claims

1. Metallic composite material in strip form, comprising a base layer of aluminium or aluminium-based alloy and a cladding applied thereon by means of roll-bonding, characterized in that the cladding consists of a layer of copper or copper-based alloy and of a solder layer, the layer of copper or copper-based alloy is arranged between base layer and solder layer, the thickness of the layer consisting of copper or copper-based alloy is in the range of 0.005 - 0.5 millimetre and the composite material has a thickness in the range of 0.05 - 3 millimetres.

2. Composite material according to Claim 1, characterized in that the base layer is provided on one side with the cladding.

3. Composite material according to Claim 2, characterized in that the base layer has an additional layer of copper or copper-based alloy on the surface opposite the cladding.

4. Composite material according to Claim 1, characterized in that the base layer is provided on both sides with the cladding.

5. Composite material according to any of Claims 1 to 4, characterized in that the thickness of the base layer is 50 - 80% of the thickness of the composite material.

6. Composite material according to any of Claims 1 to 5, characterized in that the thickness of the solder layer is 5 - 20% of the thickness of the composite material.

7. Composite material according to any of Claims 1 to 6, characterized in that the aluminium alloy comprises at least 50% by weight of aluminium.

8. Composite material according to any of Claims 1 to 7, characterized in that the copper alloy comprises at least 50% by weight of copper.

9. Composite material according to any of Claims 1 to 8, characterized in that the solder layer consists of a brazing solder.

10. Composite material according to any of Claims 1 to 8, characterized in that the solder layer consists of a soft solder.

11. Process for production of the metallic composite material according to any of Claims 1 to 10, characterized in that the layers forming the composite material are bonded to one another by continuous roll-bonding.

12. Use of the metallic composite material according to any of Claims 1 to 10 for the production of heat exchangers.

## Revendications

1. Matériau composite métallique en forme de bande, comportant une couche de base en aluminium ou en alliage à base d'aluminium et un revêtement appliqué sur celle-ci au moyen du placage-laminage, caractérisé en ce que le revêtement est constitué par une couche en cuivre ou en alliage à base de cuivre et par une couche d'apport de brasage, en ce que la couche de cuivre ou d'alliage à base de cuivre est agencée entre la couche de base et la couche d'apport de brasage, en ce que l'épaisseur de la couche en cuivre ou en alliage à base de cuivre se trouve dans la plage de 0,005 à 0,5 mm et en ce que le matériau composite présente une épaisseur comprise entre 0,05 et 3 mm.

2. Matériau composite selon la revendication 1, caractérisé en ce que la couche de base est pourvue unilatéralement du revêtement.

3. Matériau composite selon la revendication 2, caractérisé en ce que la couche de base comporte sur la surface opposée au revêtement une couche supplémentaire en cuivre ou en alliage à base de cuivre.

4. Matériau composite selon la revendication 1, caractérisé en ce que la couche de base est pourvue bilatéralement du revêtement.

5. Matériau composite selon l'une quelconque des revendications 1 à 4, caractérisé en ce que l'épaisseur de la couche de base est de 50 à 80 % de l'épaisseur du matériau composite.

6. Matériau composite selon l'une quelconque des revendications 1 à 5, caractérisé en ce que l'épaisseur de la couche d'apport de brasage est de 5 à 20 % de l'épaisseur du matériau composite.

7. Matériau composite selon l'une quelconque des revendications 1 à 6, caractérisé en ce que l'alliage d'aluminium est constitué du moins de 50 % en poids d'aluminium.

8. Matériau composite selon l'une quelconque des revendications 1 à 7, caractérisé en ce que l'alliage de cuivre est constitué du moins de 50 % en poids de cuivre.

9. Matériau composite selon l'une quelconque des revendications 1 à 8, caractérisé en ce que la couche d'apport de brasage est constituée d'un apport de brasage fort.

10. Matériau composite selon l'une quelconque des revendications 1 à 8, caractérisé en ce que la couche d'apport de brasage est constituée d'un apport de brasage tendre.

11. Procédé pour réaliser un matériau composite métallique selon l'une quelconque des revendications 1 à 10, caractérisé en ce que les couches formant le matériau composite sont reliées les unes aux autres par placage-laminage en continu.

12. Utilisation du matériau composite métallique selon l'une quelconque des revendications 1 à 10 pour la réalisation d'échangeurs de chaleur.
